# EUROPÄISCHE PATENTSCHRIFT

(11) **EP 2 194 251 B1**
(45) Veröffentlichungstag und Bekanntmachung des Hinweises auf die Patenterteilung: **13.04.2011**
(21) Anmeldenummer: 09175800.3
(22) Anmeldetag: 12.11.2009
(51) Int. Cl.: F01N 3/28

(54) **Selbsttragende Halterung für Katalysatorträgerkörper**
Self-supporting holder for catalytic converter support
Fixation autoporteuse pour corps de support de catalyseur

(30) Priorität: 05.12.2008 DE 102008060787
(43) Veröffentlichungstag der Anmeldung: 09.06.2010
(73) Patentinhaber: Emitec Gesellschaft für Emissionstechnologie mbH, 53797 Lohmar (DE)
(72) Erfinder: Wieres, Ludwig, 51491 Overath (DE); Voit, Michael, 51375 Leverkusen (DE); Kurth, Ferdi, 53894 Mechernich (DE)
(74) Vertreter: Kahlhöfer, Hermann

(56) Entgegenhaltungen:
- EP-A- 1 262 640
- EP-A- 1 688 597
- DE-A1- 4 317 092
- US-A- 4 866 932
- US-A- 5 599 509

## Beschreibung

Die Erfindung betrifft eine selbsttragende Halterung für Abgasreinigungsmodule, mit welcher zwei oder mehr Abgasreinigungsmodule parallel durchströmbar in einem Abgasreinigungssystem angeordnet werden können. Derartige parallel durchströmbare Anordnungen von Abgasreinigungsmodulen finden sich beispielsweise in Abgasreinigungssystemen von Nutzfahrzeugen, bei welchen die Abgasreinigungskapazität des Abgasreinigungssystems modular an die Verbrennungskraftmaschine und/oder die Absasproduktion angepasst werden kann (siehe z.B. US 4,866,932).

Bei der Abgasbehandlung in Abgassystemen von mobilen Verbrennungskraftmaschinen, z. B. Otto- und Diesel-Motoren, ist man heute bestrebt, Abgase derart aufzubereiten, dass diese praktisch vollständig von Schadstoffen gereinigt an die Umwelt abgegeben werden können. Die Umsetzung der Schadstoffe im Abgas erfolgt dabei meist mit Hilfe katalytisch wirkender Beschichtungen, welche bei relativ niedrigen Temperaturen aktiv sind und zur Umsetzung der Schadstoffe beitragen. Dabei ist ein zeitlich möglichst lang andauernder Kontakt der Abgase mit den katalytischen Oberflächen erwünscht, weil so eine höhere Reaktionswahrscheinlichkeit der enthaltenen Schadstoffe besteht. Hierzu werden in Abgasreinigungsanlagen möglichst große mit katalytisch wirkender Beschichtung versehene Oberflächen vorgesehen.

Gleichzeitig ist man an geringen Bauvolumina und einem geringen Strömungswiderstand von Abgasreinigungsanlagen interessiert. Geringe Bauvolumina ermöglichen die vorteilhaftere Nutzung des vorhandenen Bauraumes im Kraftfahrzeug. Geringe Strömungswiderstände der Abgasreinigungsanlagen für das durchströmende Abgas wirken sich positiv auf die Leistung der Verbrennungskraftmaschine aus. Um diesen Anforderungen gerecht zu werden, werden Abgase in Abgasreinigungsanlagen zumeist mit Abgasreinigungsmodulen mit katalytischen Beschichtungen in Kontakt gebracht. Abgasreinigungsmodule sind regelmäßig als Wabenkörper ausgeführt, beispielsweise aus gewundenen oder gewickelten, abwechselnd gewellten und glatten Metallfolien. Alternativ werden auch geschäumte oder extrudierte keramische Wabenkörper eingesetzt. Wabenkörper, insbesondere Wabenkörper aus dünnen Metallfolien, zeichnen sich durch eine große innere Oberfläche bei einen geringen Bauvolumen und relativ geringen Strömungswiderständen aus.

Um die Anforderungen hinsichtlich der Umsetzung des Abgases, des Druckverlustes über die Abgasreinigungseinrichtung und des Bauvolumens möglichst gut zu erfüllen, sind Abgasreinigungssysteme erforderlich, die in ihrer Kapazität genau an die Abgasmenge der Verbrennungskraftmaschine angepasst sind. Zusätzlich erschwert wird dies noch durch wechselnde Betriebsbedingungen der Verbrennungskraftmaschine, welche bei Kraftfahrzeugen regelmäßig auftreten.

Aus diesem Grunde wurde schon in Erwägung gezogen, mehrere Katalysatorträgerkörper in einem Schalldämpfer anzuordnen, um so zu einem modularen Aufbau einer Abgasreinigungsanlage zu gelangen, bei der die Abgasreinigungskapazität an die Anforderungen des Kraftfahrzeuges angepasst werden kann. Bisher bekannte parallele Anordnungen von Abgasreinigungsmodulen wurden jedoch im Abgassystem selbst montiert. Dies verursacht einen erheblichen Aufwand während der Montage des Abgassystems, welcher erheblichen zusätzlichen Kostenaufwand verursacht, zumal in diesem Montagestadium eines Abgassystems eigentlich nur noch größere Baugruppen und Komponenten zusammengefügt werden sollten.

Hiervon ausgehend ist es Aufgabe der hier vorliegenden Erfindung, die im Zusammenhang mit dem Stand der Technik geschilderten Probleme weiter zu lindern. Es soll insbesondere eine kostengünstige selbsttragende Halterung für mehrere Abgasreinigungsmodule vorgestellt werden, welche z. B. während der Endmontage des Abgasreinigungssystems einen geringeren Montageaufwand verursacht. Darüber hinaus soll eine Abgasanlage mit einer solchen selbsttragenden Halterung vorgestellt werden.

Die Aufgaben werden gelöst mit einer Vorrichtung gemäß den Merkmalen des Patentanspruchs 1. Weitere vorteilhafte Ausgestaltungen der Vorrichtung sind in abhängig formulierten Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Die erfindungsgemäße Vorrichtung ist eine selbsttragende Halterung für Abgasreinigungsmodule, welche mindestens zwei Abgasreinigungsmodule und mindestens zwei Halteplatten beinhaltet, wobei jeder der mindestens zwei Abgasreinigungsmodule eine Querschnittsform und mindestens eine Sicke mit einer Dicke aufweist, wobei die Sicke über die hauptsächliche Querschnittsform hinausragt, wobei weiter die mindestens zwei Abgasreinigungsmodule mindestens eine Halteplatte zumindest teilweise durchdringen und mittels der Sicke jeweils zwischen den mindestens zwei Halteplatten fixiert sind.

Die Anzahl der Abgasreinigungsmodule in der erfindungsgemäßen selbstragenden Halterung kann frei gewählt werden. Ein Hersteller für Abgasreinigungsmodule, wie z. B. Katalysatorträgerkörper, Filter, elektrisch beheizbare Wabenkörper und/oder ähnliches, kann sich somit auf die Herstellung von Abgasreinigungsmodulen mit bestimmten Größen einstellen. Zusätzlich kann er Halteplatten mit unterschiedlich vielen Ausnehmungen (als passgenaue Möglichkeit zur Durchdringung für jedes einzelne Abgasreinigungsmodul) produzieren. Die Produktion von verschiedenen Halteplatten mit unterschiedlich vielen Ausnehmungen erfordert einen wesentlich geringeren produktionstechnischen Aufwand als die Herstellung einer Vielzahl von verschiedenen Abgasreinigungsmodulen. Durch den überschaubaren zusätzlichen Montageschritt des Zusammenbaus der erfindungsgemäβen selbsttragenden Halterungen kann ein Hersteller somit Aufwand und Kosten während der Produktion von Abgasreinigungssystemen deutlich reduzieren.

Die Anzahl der Abgasreinigungsmodule in der selbsttragenden Halterung kann nach verschiedenen Kriterien gewählt werden. Abgasreinigungsmodule mit einer kleinen Abgasreinigungskapazität können zum Erreichen einer bestimmten Abgasreinigungskapazität in großer Anzahl in einer erfindungsgemäßen selbsttragenden Halterung vorgesehen sein. Auch erfordern solche klein gewählten Abgasreinigungsmodule einen höheren Montageaufwand bei dem Zusammenbau der erfindungsgemäßen selbsttragenden Halterung. Größere Abgasreinigungsmodule verringern die Anzahl der Abgasreinigungsmodule, die zum Erreichen einer bestimmten Abgasreinigungskapazität in der selbsttragenden Halterung notwendig sind. Gleichzeitig kann die Abgasreinigungskapazität der gesamten selbsttragenden Halterung weniger exakt eingestellt werden.

Auch können einzelne Ausnehmungen in den Halteplatten der selbsttragenden Halterung mit nicht-durchströmbaren Abdeckplatten verschlossen werden, um bestimmte Abgasreinigungskapazitäten zu realisieren, ohne dazu verschiedene Halteplatten zu verwenden.

Unter einer Querschnittsform wird insbesondere eine primäre Grundform des Abgasreinigungsmoduls verstanden. Bevorzugte Querschnittsformen für diesen Zweck sind: Kreis, Oval, Vieleck, wobei eine Querschnittsform mit einer asymmetrischen Grundform ganz besonders bevorzugt sind, weil diese einfach in einer konkreten Ausrichtung in die Halterung eingeführt werden können (Formschluss).

Mit einer Sicke ist insbesondere gemeint, dass eine radial auswärts gerichtete Erhebung über die Querschnittsform hervorsteht. Die Anzahl der Sicken pro Abgasreinigungsmodul beträgt bevorzugt 1.

Grundsätzlich ist es möglich, dass einzelne oder alle Abgasreinigungsmodule wenigstens eine der beiden Halteplatten durchdringen, oder sogar beide.

Für die Fixierung werden die Sicken bevorzugt zwischen den Halteplatten verspannt bzw. geklemmt. Bevorzugt ist weiter, dass die Sicken in etwa formschlüssig in die Halteplatten eingebettet sind, wobei gegebenenfalls die Klemmkräfte im Wesentlichen nur über die Halteplatten realisiert sind. Die Fixierung ist also insbesondere lösbar, kann aber in Ausnahmefällen erforderlichenfalls mit zusätzlichen Schweißverbindungen oder Lötverbindungen ausgeführt werden.

Besonders vorteilhaft ist die erfindungsgemäße selbsttragende Halterung, wenn zumindest ein Abgasreinigungsmodul wenigstens ein Gehäuse aufweist, auf dem die Sicke (insbesondere einstückig) eingerichtet ist und in dem ein Wabenkörper vorgesehen ist. Ein solches Gehäuse kann beispielsweise durch Tiefziehen mit einer Sicke versehen werden. Auch möglich ist, eine Sicke am Ende des Gehäuses vorzusehen oder ein Gehäuse zweiteilig aus zwei Teilgehäusen aufzubauen, wobei beide Teilgehäuse an einem Ende mit einem Kragen versehen sind und diese beiden Kragen gemeinsam die Sicke bilden, welche zwischen den zwei Halteplatten formschlüssig fixiert wird.

Weiterhin vorteilhaft ist es, wenn der Wabenkörper nur aus zumindest teilweise strukturierten metallischen Lagen (Blech, Gitter, Gestrick, Vlies, etc.) aufgebaut ist, z. B. aus gewellten Metallfolien und glatten Metallfolien besteht, und diese zumindest teilweise derart (abwechselnd) gewickelt, gewunden oder gestapelt sind, dass Kanäle gebildet werden. Solche metallischen Abgasreinigungsmodule lassen sich besonders vorteilhaft in erfindungsgemäßen selbsttragenden Halterungen einsetzen. Die Produktion derartiger Abgasreinigungsmodule ist in hohen Stückzahlen günstiger. Aus diesem Grunde ist der Einsatz einer Vielzahl kleinerer Katalysatorträgerkörper in einem Abgassystem, welcher durch die erfindungsgemäße Halterung erforderlich wird, vertretbar. Außerdem sind solche Abgasreinigungsmodule (z. B. Katalysatorträgerkörper oder Partikelabscheider) häufig dafür ausgerichtet, turbulente Strömungen in ihrem Inneren zu erzeugen. Dafür weisen sie verschiedenartigste Umlenkflächen im Inneren auf. Um tatsächlich turbulente Strömungen im Abgasreinigungsmodul erreichen zu können, sind ggf. gewisse Mindestvolumenströme durch das Abgasreinigungsmodule erforderlich. Aus diesem Grunde ist die erfindungsgemäße Anordnung im Zusammenhang mit turbulent durchströmten Abgasreinigungsmodulen von großem Vorteil. Erfindungsgemäße selbsttragende Halterungen sind besonders vorteilhaft, wenn die Sicke der Abgasreinigungsmodule zumindest umlaufend ausgestaltet ist oder vollständig über die Querschnittsform der mindestens zwei Abgasreinigungsmodule hinausragt. Bevorzugt sind jedoch beide Merkmale mit der Sicke verwirklicht. Eine formschlüssige Fixierung der Abgasreinigungsmodule in der erfindungsgemäßen selbsttragenden Halterung ist grundsätzlich auch ermöglicht, wenn die Sicke nur teilweise über die Querschnittsform hinausragt. Bei einer vollständig radial umlaufenden Sicke kann jedoch gleichzeitig eine Abdichtung von Abgasreinigungsmodul und Halteplatte gegeneinander erfolgen, so dass keine Umströmung des Abgasreinigungsmoduls erfolgen kann.

Darüber hinaus ist es von Vorteil, wenn mindestens ein Abstandshalter vorgesehen ist, der zwischen den mindestens zwei Halteplatten einen Abstand bildet. Dieser Abstand kann auf die Dicke der Sicke am Abgasreinigungsmodul eingestellt sein. Er kann entweder genauso gewählt werden oder auch etwas geringer. So kann eine definierte Pressung der Sicke zwischen den zwei Halteplatten eingestellt werden.

Darüber hinaus ist es vorteilhaft, wenn die mindestens zwei Halteplatten mit Hilfe von lösbaren Verbindungsmitteln miteinander verbunden sind. Die erfindungsgemäße selbsttragende Halterung derart einzurichten, dass die Verbindungsmittel der beiden Halteplatten lösbar sind, ermöglicht eine zerstörungsfreie Demontage. Dies wiederum eröffnet die Möglichkeit, defekte einzelne Abgasreinigungsmodule auszuwechseln, ohne dass die gesamte selbsttragende Halterung ausgewechselt werden müsste. Bei der Wartung von Abgasanlagen kann dies einen erheblichen Kostenvorteil bedeuten. Als lösbare Verbindungsmittel kommen insbesondere Schraubverbindungen oder ähnliches in Betracht.

Auch erfindungsgemäß ist es, wenn die mindestens zwei Abgasreinigungsmodule auf den mindestens zwei Halteplatte versetzt zueinander angeordnet sind. Solche Anordnungen ermöglichen einen platzsparenden Aufbau von Abgassystemen. Besonders geeignet sind asymmetrisch geformte Abgasreinigungsmodule für solche Anordnungen. Beispielsweise lassen sich sechseckige Abgasreinigungsmodule in einem dicht gepackten Muster auf einer Halteplatte anordnen. Aber auch runde Querschnittsformen von Katalysatorträgerkörpern können relativ dicht angeordnet werden. Eine "versetzte" Anordnung bedeutet insbesondere, dass die Zentren der Abgasreinigungsmodule nicht alle auf einer Linie angeordnet sind, insbesondere sind die benachbarten Abgasreinigungsmodule auf einem Muster angeordnet (z. B. einem Vieleck). Eine dichte Anordnung wird insbesondere dann erreicht, wenn die Zentren benachbarter Abgasreinigungsmodule mit einer Distanz zueinander angeordnet sind, die kleiner als die maximale Ausdehnung der Querschnittsform ist oder zumindest dieser sehr nahe kommt.

Darüber hinaus erfindungsgemäß ist eine Abgasanlage für ein Kraftfahrzeug mit einer Verbrennungskraftmaschine, die mindestens eine erfindungsgemäße selbsttragende Halterung aufweist. Dabei ist die Halterung zum Beispiel zwischen Leitungsabschnitte der Abgasanleitung quer zur Strömungsrichtung positioniert, so dass bevorzugt alle Abgasreinigungsmodule parallel von dem Abgas durchströmbar sind. Gegebenenfalls können auch mehrere solcher Halteplatten hintereinander angeordnet sein, z. B. mit unterschiedlichen Abgasreinigungsmodulen (ggf. erst Oxidationskatalysatoren, dann Partikelfallen, dann SCR-Katalysatoren, ...). Dabei können die Abgasreinigungsmodule der verschiedenen Halteplatten zueinander fluchtend ausgerichtet sein. Es ist ggf. auch möglich, zwischen (oder an) diesen Halteplatten wenigstens eine Reduktionsmittelzugabevorrichtung und/oder Strömungsmischer oder dergleichen anzuordnen.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Insbesondere ist darauf hinzuweisen, dass die Figuren und insbesondere die dargestellten Größenverhältnisse nur schematisch sind. Es zeigen schematisch:
- Fig. 1:: eine erste Ausführungsvariante der Erfindung, bei der ein Abgasreini- gungsmodul zwei Halteplatten durchdringt,
- Fig. 2:: eine zweite Ausführungsvariante der Erfindung, bei der ein Abgasreini- gungsmodul eine Halteplatte durchdringt,
- Fig. 3:: eine besonders günstige platzsparende Anordnung von Abgasreini- gungsmodulen an einer Halteplatte,
- Fig. 4:: einen Abgasreinigungsmodul mit einem gewundenen Katalysatorträger- körper für eine erfindungsgemäße Vorrichtung, und
- Fig. 5:: ein Kraftfahrzeug mit einer erfindungsgemäßen Vorrichtung.

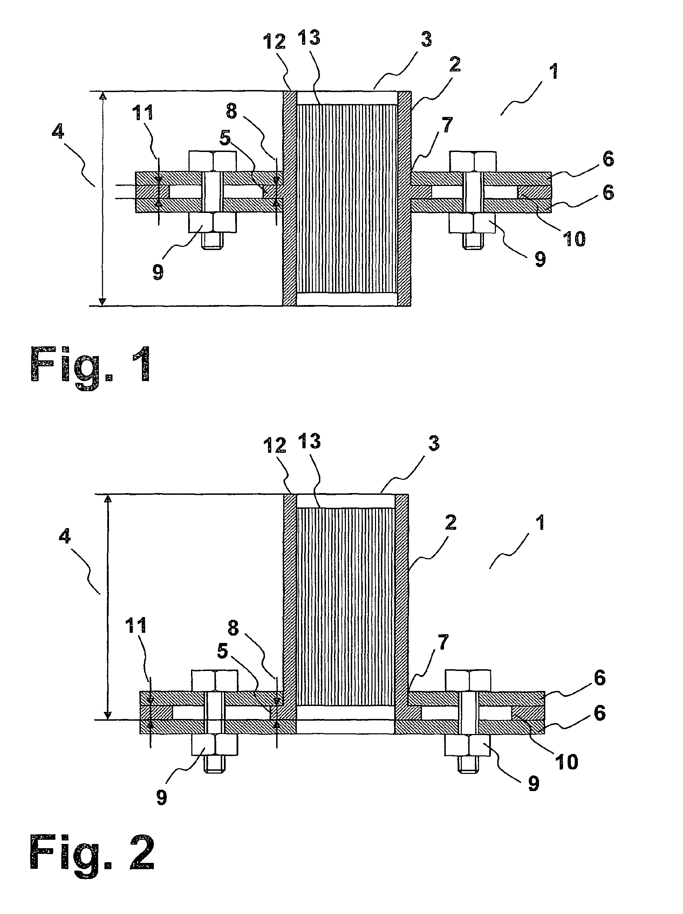

Fig. 1 zeigt einen Ausschnitt einer erfindungsgemäßen selbsttragenden Halterung 1, in welchem ein Abgasreinigungsmodul 2 dargestellt ist. Das Abgasreinigungsmodul 2 (z. B. ein Katalysatorträgerkörper oder ein Partikelabscheider oder eine Multifunktionsabgasbehandlungseinrichtung) durchdringt mit seiner Querschnittsform 3 und seiner Länge 4 zwei Halteplatten 6. Das Abgasreinigungsmodul 2 weist dabei eine Sicke 5 mit einer Dicke 8 auf. Es durchdringt die Halteplatten 6 durch deren Ausnehmungen 7. Die Sicke 5 ist zwischen den beiden Halteplatten 6 formschlüssig fixiert. Ein Abstandshalter 10, welcher zwischen den beiden Halteplatten 6 einen Abstand 11 erzeugt, ist zusätzlich vorgesehen. Verbindungsmittel 9, welche hier als Schrauben ausgeführt sind, halten die selbsttragende Halterung 1 zusammen. Das Abgasreinigungsmodul 2 ist mit einem Gehäuse 12 und einem in diesem angeordneten Wabenkörper 13 ausgeführt.

Fig. 2 zeigt ebenfalls ein Ausschnitt einer erfindungsgemäßen selbsttragenden Halterung 1, in welchem ein Abgasreinigungsmodul zu sehen ist. Hier durchdringt das Abgasreinigungsmodul 2 nur eine der beiden Halteplatten 6 und wird zwischen diesen mit seiner Sicke 5 und deren Dicke 8 fixiert. Auch hier ist ein Abstandshalter 10, welcher einen Abstand 11 zwischen den beiden Halteplatten 6 erzeugt, vorgesehen. Die beiden Halteplatten 6 sind ebenfalls mit Hilfe von Verbindungsmitteln 9 miteinander verbunden und halten so die erfindungsgemäße selbsttragende Halterung 1 zusammen. Auch das hier vorgesehene Abgasreinigungsmodul weist ein Gehäuse 12, ein in diesem angeordneten Wabenkörper 13 und eine Länge 4 auf.

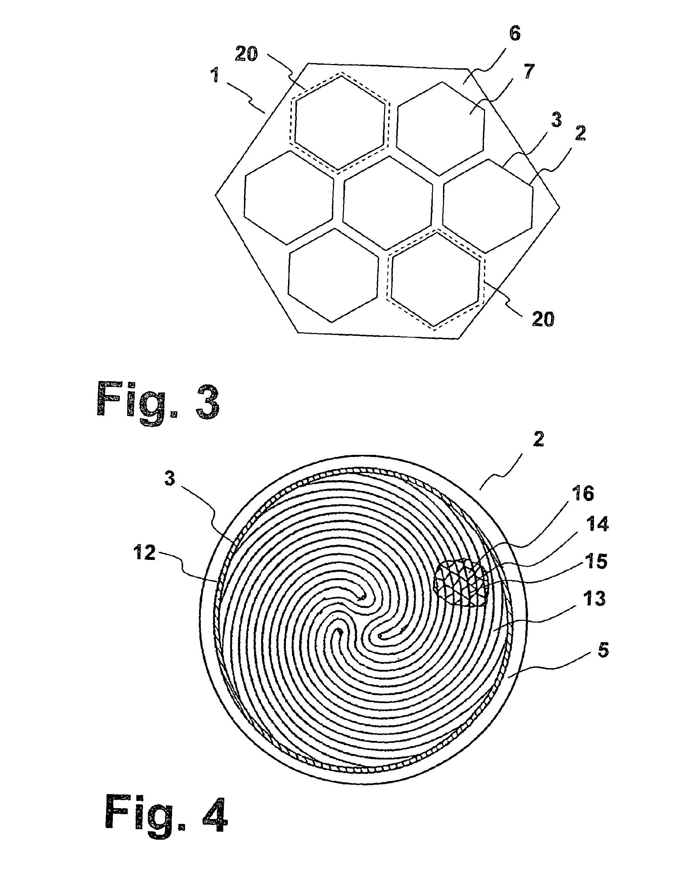

Fig. 3 zeigt eine besonders platzsparende Anordnung von Abgasreinigungsmodulen 2 mit einer sechseckigen Querschnittsform 3 in einer erfindungsgemäßen selbsttragenden Halterung 1. Die Ausnehmungen 7 der Halteplatte 6 sind hier derart angeordnet, dass sich eine platzsparende Anordnung der Abgasreinigungsmodule 2 ergibt. Eine sechseckige Querschnittsform 3 ist für eine solche platzsparende Anordnung besonders gut geeignet. Einzelne Ausnehmungen 7 können mit Hilfe von Deckplatten 20 verschlossen werden, um eine genaue Anpassung der Abgasreinigungskapazität der erfindungsgemäßen selbstragenden Halterung 1 zu erreichen, ohne dabei verschiedene Halteplatten 6 mit Ausnehmungen 7 bereit halten zu müssen. Die benachbart angeordneten Abgasreinigungsmodule sind dabei mit ihren im wesentlichen flachen Seitenflächen parallel zueinander positioniert, so dass jeweils ein Spalt von wenigen Millimetern gebildet ist, beispielsweise ein Spalt kleiner 30 mm oder sogar kleiner 15 mm. Dabei kann also z. B. eine Packungsdichte erreicht werden, so dass mehr als 90 % der vom Abgas angeströmten Fläche auf die Eintrittsstirnseite der Abgasreinigungsmodule trifft, ggf. sogar mehr als 95 %. Damit kann ein unerwünscht hoher Staudruck des Abgases im Einsatz vermieden werden.

Fig. 4 zeigt ein Abgasreinigungsmodul 2, der sich besonders für die erfindungsgemäße Vorrichtung eignet. Das Abgasreinigungsmodul 2 hat einen runden Querschnitt 3. Er besteht aus einem Gehäuse 12, welches mit einer Sicke 5 ausgestattet ist und in ihm ist ein Wabenkörper 13 angeordnet. Der Wabenkörper 13 ist aus gewellten Metallfolien 14 und glatten Metallfolien 15 derart gewunden, dass sich Kanäle 16 ergeben, welche für das Abgas passierbar sind.

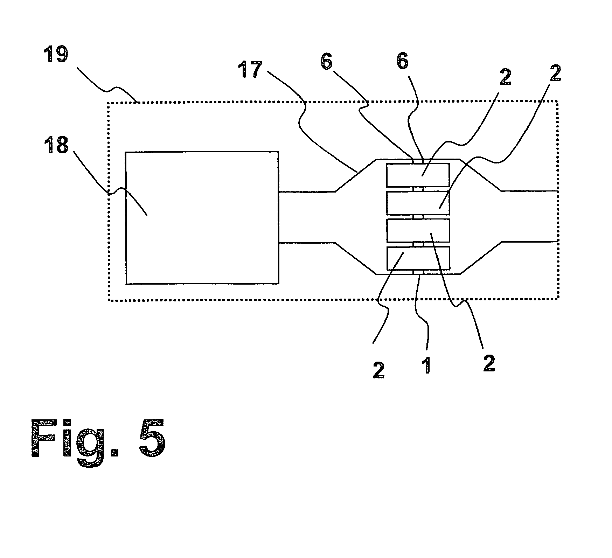

Fig. 5 zeigt ein Kraftfahrzeug 19 mit einer Verbrennungskraftmaschine 18, die mit einer Abgasanlage 17 ausgeführt ist. In der Abgasanlage 17 ist eine selbsttragende Halterung 1 vorgesehen, welche eine Mehrzahl von Abgasreinigungsmodulen 2 mit Hilfe von Halteplatten 6 parallel in der Abgasströmung hält. Bevorzugt ist, dass mindestens 10 Abgasreinigungsmodule oder sogar mindestens 18 Abgasreinigungsmodule in die selbsttragende Halteplatte 1 integriert sind.

Die erfindungsgemäße selbsttragende Halterung ermöglicht eine besonders einfache und produktionstechnisch günstige Ausführung von Abgasreinigungsanordnungen, welche an die verschiedenartigsten Anforderungen an Abgasanlagen von Kraftfahrzeugen angepasst werden können, ohne dass viele unterschiedliche Katalysatorträgerkörpertypen hergestellt werden müssen.

### Bezugszeichenliste

- 1: selbsttragende Halterung
- 2: Abgasreinigungsmodul
- 3: Querschnittsform
- 4: Länge
- 5: Sicke
- 6: Halteplatte
- 7: Ausnehmung
- 8: Dicke
- 9: Verbindungsmittel
- 10: Abstandshalter
- 11: Abstand
- 12: Gehäuse
- 13: Wabenkörper
- 14: gewellte Metallfolie
- 15: glatte Metallfolie
- 16: Kanal
- 17: Abgasanlage
- 18: Verbrennungskraftmaschine
- 19: Kraftfahrzeug
- 20: Deckplatte

## Patentansprüche

1. Selbsttragende Halterung (1) für Abgasreinigungsmodule, welche mindestens zwei Abgasreinigungsmodule (2) und mindestens zwei Halteplatten (6) beinhaltet, wobei jeder der mindestens zwei Abgasreinigungsmodule (2) eine Querschnittform (3) und mindestens eine Sicke (5) mit einer Dicke (8) aufweist, wobei die Sicke (5) über die hauptsächliche Querschnittsform (3) hinaus ragt, wobei weiter die mindestens zwei Abgasreinigungsmodule (2) mindestens eine Halteplatte (6) zumindest teilweise durchdringen und mittels der Sicke (5) jeweils zwischen den mindestens zwei Halteplatten (6) fixiert sind.

2. Selbsttragende Halterung (1) gemäß Patentanspruch 1, wobei die Sicke (5) der Abgasreinigungsmodule zumindest umlaufend ausgestaltet ist oder vollständig radial über die Querschnittsform (3) der mindestens zwei Katalysatorträgerkörpers (2) hinaus ragt.

3. Selbsttragende Halterung (1) gemäß einem der vorhergehenden Patentansprüche, wobei die mindestens eine Halteplatte (6) mit mindestens einem Abstandshalter (10) vorgesehen ist, der zwischen den mindestens zwei Halteplatten (6) einen Abstand (11) bildet.

4. Selbsttragende Halterung (1) gemäß einem der vorhergehenden Patentansprüche, wobei die mindestens zwei Halteplatten (6) mit Hilfe von lösbaren Verbindungsmitteln (9) miteinander verbunden sind.

5. Selbsttragende Halterung (1) gemäß einem der vorhergehenden Patentansprüche, wobei die mindestens zwei Abgasreinigungsmodule (2) auf den mindestens zwei Halteplatten (6) versetzt zueinander angeordnet sind.

6. Abgasanlage (17) für ein Kraftfahrzeug (19) mit einer Verbrennungskraftmaschine (18), die mindestens eine selbsttragende Halterung (1) nach einem der vorhergehenden Patentansprüche aufweist.

## Claims

1. Self-supporting mount (1) for exhaust gas purification modules, comprising at least two exhaust gas purification modules (2) and at least two retaining plates (6), wherein each of the at least two exhaust gas purification modules (2) having a cross sectional shape (3) and at least one bead (5) with a thickness (8), wherein the bead (5) projects beyond the main cross sectional shape (3) and wherein, further, the at least two exhaust gas purification modules (2) pass at least partially through at least one retaining plate (6) and are fixed between said at least two retaining plates (6) by means of the bead (5).

2. Self-supporting mount (1) according to claim 1, wherein the bead (5) of the exhaust gas purification modules extend at least around or project entirely radially beyond the cross sectional shape (3) of the at least two exhaust gas purification modules (2).

3. Self-supporting mount (1) according to one of the preceding claims, wherein the at least one retaining plate (6) is provided with a spacer (10) forming a space (11) between said at least two retaining plates (6).

4. Self-supporting mount (1) according to one of the preceding claims, wherein the at least two retaining plates (6) are interconnected with each another by means of releasable fasteners (9).

5. Self-supporting mount (1) according to one of the preceding claims, wherein the at least two exhaust gas purification modules (2) are disposed offset relative to one another on the at least two retaining plates (6).

6. Exhaust system (17) for a motor vehicle (19) having an internal combustion engine (18), comprising at least one self-supporting mount (1) according to one of the preceding claims.

## Revendications

1. Fixation autoporteuse (1) pour des modules de purification de gaz d'échappement laquelle comporte au moins deux modules de purification de gaz d'échappement (2) et au moins deux plaques de retenue (6), chacun des au moins deux modules de purification de gaz d'échappement (2) disposant d'une forme de section transversale (3) et d'au moins un bourrelet (5) avec une épaisseur (8), le bourrelet (5) s'étendant au-delà de la section transversale (3) principale, dans quel cas en outre les au moins deux modules de purification de gaz d'échappement (2) pénètrent au moins partiellement au moins une plaque de retenue et sont fixés respectivement au moyen du bourrelet (5), respectivement entre les au moins deux plaques de retenue (6).

2. Fixation autoporteuse (1) selon la revendication 1, le bourrelet (5) des modules de purification de gaz d'échappement étant réalisé au moins de façon circonférentielle ou de manière à s'étendre complètement de façon radiale au-delà de la forme de section transversale (3) des au moins deux corps de support de catalyseurs (2).

3. Fixation autoporteuse (1) selon l'une des revendications précédentes, l'au moins une plaque de retenue (6) étant pourvue d'au moins un écarteur (10) qui forme un écart (11) entre les au moins deux plaques de retenue (6).

4. Fixation autoporteuse (1) selon l'une des revendications précédentes, les au moins deux plaques de retenue (6) étant connectées entre elles à l'aide de moyens de connexion détachables (9).

5. Fixation autoporteuse (1) selon l'une des revendications précédentes, les au moins deux modules de purification de gaz d'échappement (2) étant agencés de façon décalée sur les au moins deux plaques de retenue (6).

6. Système de gaz d'échappement (17) pour un véhicule automobile (19) avec une machine à combustion interne (18) qui a au moins une fixation autoporteuse (1) selon l'une des revendications précédentes.
